# EUROPEAN PATENT APPLICATION

(11) **EP 4 645 887 A1**
(43) Date of publication of application: **05.11.2025**
(21) Application number: 23910056.3
(22) Date of filing: 08.12.2023
(51) Int. Cl.: H04N 21/845, H04N 21/44, H04N 21/472

(54) **ONLINE VIDEO EDITING METHOD AND APPARATUS, AND ELECTRONIC DEVICE AND STORAGE MEDIUM**

(30) Priority: 29.12.2022 CN 202211713297
(71) Applicant: Beijing Zitiao Network Technology Co., Ltd., Beijing 100190 (CN)
(72) Inventor: LIU, Dan, Beijing 100028 (CN); YIN, Yunjiang, Beijing 100028 (CN); SHU, Teqiang, Beijing 100028 (CN); XU, Qi, Beijing 100028 (CN)
(74) Representative: Grünecker Patent- und Rechtsanwälte PartG mbB
(86) International application number: PCT/CN2023/137576
(87) International publication number: WO 2024/140126

(57) **Abstract**

The present disclosure discloses a method, an apparatus, an electronic device and a storage medium for online video editing, by in response to importing an initial video in a video editing task, receiving a video segment of the initial video which is sent in slicing by a cloud, wherein the video segment comprises at least one video frame of the initial video; in response to a first editing instruction without all video segments of the initial video being received, presenting a video track segment corresponding to the initial video on the video editing track, and presenting a video frame image of an already received video segment in the initial video in a video preview area; and in response to a second editing instruction, presenting an identifier of the second editing instruction on the editing track and presenting a target video frame image in the video preview area, wherein the second editing instruction is configured to edit the initial video; and the target video frame image is configured to display an editing result of a video frame image under the second editing instruction, loading in slicing and editing in slicing of the initial video is implemented, and the efficiency of video editing is improved.

## Description

### CROSS-REFERENCING OF RELATED APPLICATIONS

This application claims priority to Chinese Patent Application No. 202211713297.7, filed on December 29, 2022, and entitled "METHOD, APPARATUS, ELECTRONIC DEVICE AND STORAGE MEDIUM FOR ONLINE VIDEO EDITING", the entirety of which is incorporated herein by reference.

### FIELD

Embodiments of the present disclosure relate to the technical field of internet, and in particular, to a method, an apparatus, an electronic device and a storage medium for online video editing.

### BACKGROUND

**In** a process of using a video playing application (APP) and a video editing application, a user has a requirement of performing secondary editing on an interested online video. In the conventional technology, such kind of applications provide a corresponding video editing interface for the user, so that the user can edit the online video in the video editing interface.

However, in the conventional technology, before editing the online video with the terminal device, the complete online video needs to be downloaded to the local first by the terminal device, then the online video may be edited, which leads to the waiting time consumption before the video editing, and reduces the efficiency and fluency of video editing.

### SUMMARY

Embodiments of the present disclosure provides a method, an apparatus, an electronic device and a storage medium for online video editing, to overcome the problem of waiting time consumption existing before video editing.

**In** a first aspect, embodiments of the present disclosure provide a method for online video editing, including:
in response to importing an initial video in a video editing task, receiving a video segment of the initial video which is sent in slicing by a cloud, wherein the video segment comprises at least one video frame of the initial video; in response to a first editing instruction for the initial video being placed on a video editing track of a video editing interface without all video segments of the initial video being received, presenting a video track segment corresponding to the initial video on the video editing track, and presenting a video frame image of an already received video segment in the initial video in a video preview area; and in response to a second editing instruction for a video track segment corresponding to the initial video without all video segments of the initial video being received, presenting an identifier of the second editing instruction on the editing track and presenting a target video frame image in the video preview area, wherein the second editing instruction is configured to edit the initial video; and the target video frame image is configured to display an editing result of a video frame image of an already received video segment in the initial video under the second editing instruction.

**In** a second aspect, embodiments of the present disclosure provide an apparatus for online video editing, including:
an obtaining module configured to in response to importing an initial video in a video editing task, receive a video segment of the initial video which is sent in slicing by a cloud, wherein the video segment comprises at least one video frame of the initial video;
a displaying module configured to in response to a first editing instruction for the initial video being placed on a video editing track of a video editing interface without all video segments of the initial video being received,
present a video track segment corresponding to the initial video on the video editing track, and present a video frame image of an already received video segment in the initial video in a video preview area; and
an editing module, configured to in response to a second editing instruction for a video track segment corresponding to the initial video without all video segments of the initial video being received, present an identifier of the second editing instruction on the editing track and present a target video frame image in the video preview area, wherein the second editing instruction is configured to edit the initial video; and the target video frame image is configured to display an editing result of a video frame image of an already received video segment in the initial video under the second editing instruction.

**In** a third aspect, embodiments of the present disclosure provide an electronic device, including:
a processor, and a memory communicatively connected to the processor;
the memory storing computer executable instructions;
the processor executing the computer executable instructions stored in the memory, to implement the method for online video editing according to the first aspect and various possible designs of the first aspect.

**In** a fourth aspect, embodiments of the present disclosure provide a computer readable storage medium, the computer readable storage medium storing computer executable instructions, when a processor executes the computer executable instructions, implements the method for online video editing according to the first aspect and various possible designs of the first aspect.

**In** a fifth aspect, embodiments of the present disclosure provide a computer program product, comprising a computer program, when executed by a processor, the computer program implements the method for online video editing according to the first aspect and various possible designs of the first aspect.

According to the method, the apparatus, the electronic device and the storage medium for online video editing provided by the present disclosure, by in response to importing an initial video in a video editing task, receiving a video segment of the initial video which is sent in slicing by a cloud, wherein the video segment comprises at least one video frame of the initial video; in response to a first editing instruction for the initial video being placed on a video editing track of a video editing interface without all video segments of the initial video being received, presenting a video track segment corresponding to the initial video on the video editing track, and presenting a video frame image of an already received video segment in the initial video in a video preview area; and in response to a second editing instruction for a video track segment corresponding to the initial video without all video segments of the initial video being received, presenting an identifier of the second editing instruction on the editing track and presenting a target video frame image in the video preview area, wherein the second editing instruction is configured to edit the initial video; and the target video frame image is configured to display an editing result of a video frame image of an already received video segment in the initial video under the second editing instruction, the method provided in embodiments, by receiving a video segment of the initial video which is sent in slicing by a cloud, stream loading the video segment, and then performing stream editing on the video segment according to an editing instruction, so that achieves loading in slicing and editing in slicing of the initial video, without the need of downloading the complete initial video to the local before editing, so that the downloading waiting time consumption before the video editing is avoided, and the efficiency and fluency of video editing are improved.

### BRIEF DESCRIPTION OF DRAWINGS

In order to more clearly illustrate embodiments of the present disclosure or the technical solutions in the related technology, the accompanying drawings need to be used in the description of embodiments or the related technology will be briefly introduced below, and it will be apparent that the drawings in the following descriptions are some embodiments of the present disclosure, and those skilled in the art may also obtain other drawings according to these drawings without creative labor.
FIG. 1 is an application scenario diagram of a method for online video editing provided by embodiments of the present disclosure;
FIG. 2 is a schematic flowchart 1 of a method for online video editing provided by embodiments of the present disclosure;
FIG. 3 is a schematic diagram of a process of obtaining a video segment provided by embodiments of the present disclosure;
FIG. 4 is a flowchart of a specific implementation of step S101 in embodiments shown in FIG. 2;
FIG. 5 is a flowchart of a specific implementation of step S102 in embodiments shown in FIG. 2;
FIG. 6 is a schematic diagram of a video editing interface provided by embodiments of the present disclosure;
FIG. 7 is a schematic flowchart 2 of a method for online video editing provided by embodiments of the present disclosure;
FIG. 8 is a schematic diagram of a video jumping playback provided by embodiments of the present disclosure;
**FIG.** 9 is a schematic diagram of a to-be-processed video frame provided by embodiments of the present disclosure;
FIG. 10 is a schematic diagram of another to-be-processed video frame provided by embodiments of the present disclosure;
FIG. 11 is a block diagram of a structure of an apparatus for online video editing provided by embodiments of the present disclosure;
FIG. 12 is a schematic diagram of a structure of an electronic device provided by embodiments of the present disclosure; and
FIG. 13 is a schematic diagram of a hardware structure of an electronic device provided by embodiments of the present disclosure.

### DETAILED DESCRIPTION

In order to make the objectives, technical solutions and advantages of embodiments of the present disclosure clearer, the technical solutions in embodiments of the present disclosure will be clearly and completely described below with reference to the accompanying drawings in embodiments of the present disclosure. Obviously, embodiments described are a part of embodiments of the present disclosure, rather than all embodiments. Based on embodiments of the present disclosure, all other embodiments obtained by those skilled in the art without creative labor belong to the protection scope of the present disclosure.

It should be noted that all the user information (including but not limited to user equipment information, user personal information, etc. ) and data (including but not limited to data for analysis, stored data, displayed data, etc. ) involved in the present application are information and data that are authorized by the user or sufficiently authorized by the parties, and collection, using and processing of the related data needs to comply with relevant laws, regulations and standards of related countries and regions, and a corresponding operation portal is provided for the user to select authorization or decline.

The application scenario of embodiments of the present disclosure is described in the followings.

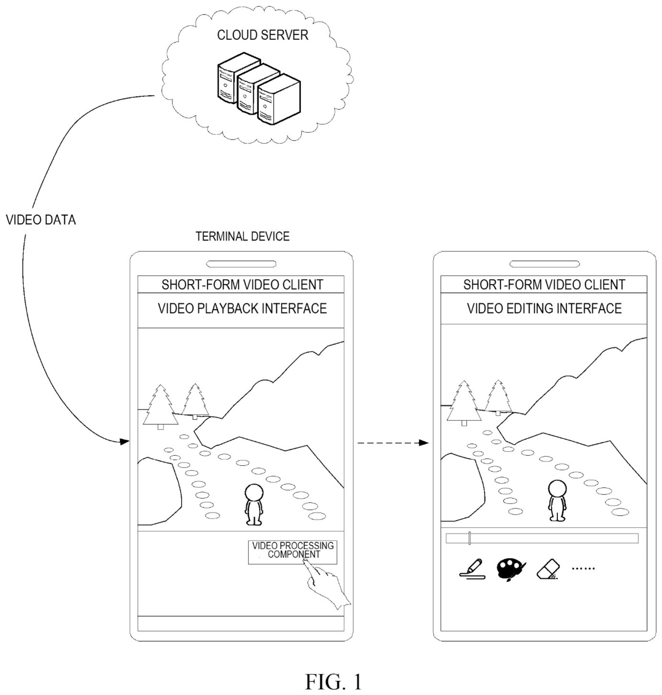

FIG. 1 is an application scenario diagram of a method for online video editing provided by embodiments of the present disclosure, the method for online video editing provided by embodiments of the present disclosure may be applied to application scenarios of online video editing. Specifically, as shown in FIG. 1, the method provided by embodiments of the present disclosure may be applied to a terminal device, the terminal device communicates with a cloud (shown as a cloud server in the figure), where a short-form video application client runs in the terminal device, a video playback interface is set in the short-form video client, the terminal device obtains video data sent by the cloud and plays the video data in the video playback interface, when the user watches a video of interest, by triggering the video forwarding or video editing component (shown in the figure as clicking a video processing component), may jump to the video editing interface, and then edits the currently played video by using a video editing tool provided in the video editing interface, for example, adding a video effect, adding a filter, and the like, so as to generate an edited target video, to achieve the purpose of secondary editing the online video. Then, based on the specific requirement, the target video generated in the above process may be further saved and forwarded.

As for the above application scenario of online video editing, in the conventional technology, before editing the online video through the terminal device, the terminal device needs to download the complete online video to the local first, and then to edit, for example, downloading the short-form video shown in FIG. 1 completely to the local, and then loading the short-form video is from the local to the video editing function unit in the short-form video client, and then may edit the video. Thus, the waiting time consumption before video editing is caused, and the efficiency and fluency of video editing are reduced.

Embodiments of the invention provides a method for online video editing to solve the foregoing problem.

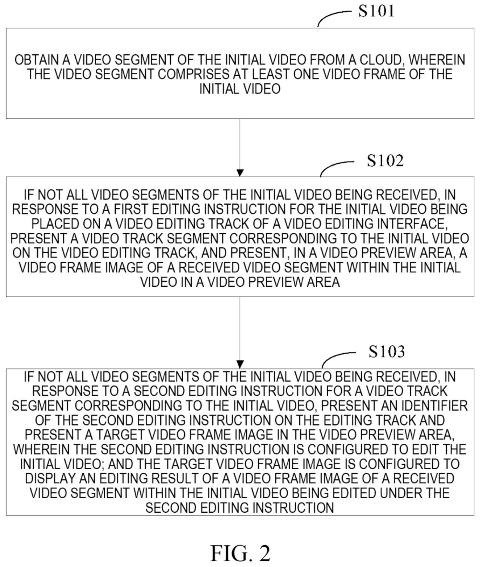

Referring to FIG. 2, FIG. 2 is a schematic flowchart 1 of a method for online video editing provided by embodiments of the present disclosure. The method of this embodiment may be applied to a terminal device, and the method for online video editing includes:

Step S101: in response to importing an initial video in a video editing task, receive a video segment of the initial video from a cloud, wherein the video segment comprises at least one video frame of the initial video.

For example, referring to the application scenario schematic diagram shown in FIG. 1, an execution body of the method provided in this embodiment is a terminal device, a video playback client is run in the terminal device, for example, a short-form video client, by receiving an editing operation of a user, the terminal device determines an initial video corresponding to the selection editing, for example, determines a video identifier of the initial video, and then obtains, based on the video identifier, a video segment corresponding to the initial video from a cloud storing the initial video, where the video segment includes at least one video frame of the initial video. After that, the terminal device plays the video segment in the video editing page. The video segment is also referred to as a video slice, which is a video data packet, as an example, the video data packet corresponding to the video segment includes a progress identifier used to represent a video playback position and corresponding video frame data, and after receiving the video data packet, the terminal device may perform independent decoding and playback based on the video data packet. The video segment in the initial video may be pre-divided, for example, the initial video is divided according to a predetermined size of the video data packet, or as an example, the initial video is divided according to a predetermined amount of video data packets, to obtain a plurality of video data packets, that is, a video segment.

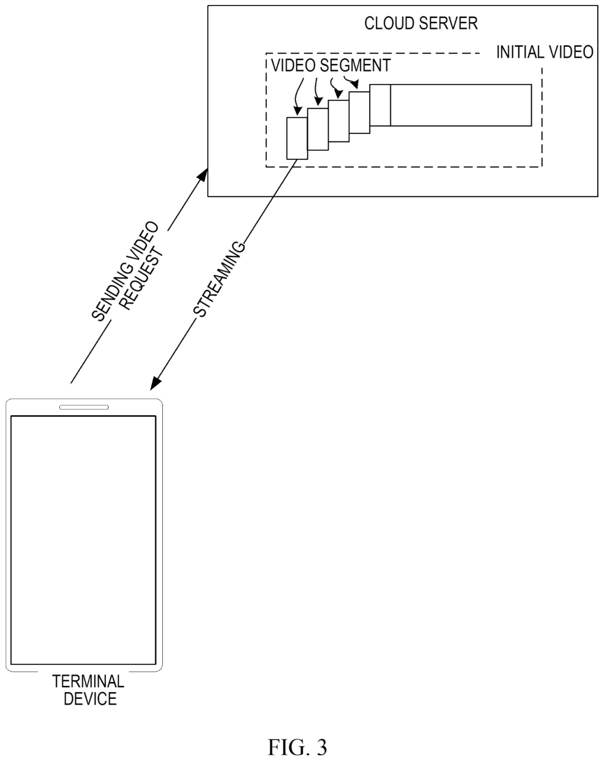

FIG. 3 is a schematic diagram of a process of obtaining a video segment provided by embodiments of the present disclosure, as shown in FIG. 3, the terminal device sends a video request to a cloud server corresponding to the cloud, and then the cloud server sends at least one video segment of the corresponding initial video to the terminal device in a streaming manner based on the video request; and after receiving the video segment, the terminal device plays the various video segments in sequence according to the playback time stamp corresponding to the video segment, to implement a video preview function in the editing page.

Further, when the terminal device loads the initial video for the first time, the initial video is played from the first frame of the initial video in the video editing page in default, or the first frame of the initial video is statically displayed. In this case, the video segment of the initial video obtained by the terminal device from the cloud is the first video segment of the initial video; and when the terminal device does not load the initial video for the first time, for example, has previously performed all or part of the download on the initial video, the terminal device obtains the corresponding video segment based on the download progress.

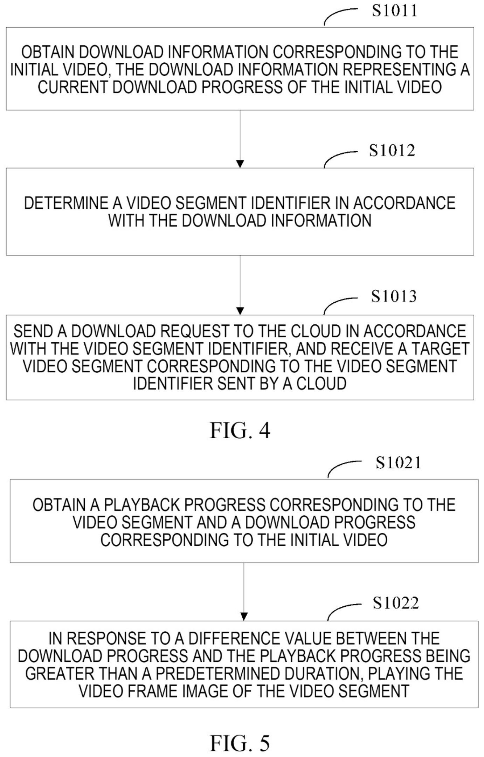

In a possible implementation, as shown in FIG. 4, a specific implementation of step S101 includes:
Step S1011: obtain download information corresponding to the initial video, the download information representing a current download progress of the initial video.
Step S1012: determine a video segment identifier in accordance with the download information.
Step S1013: send a download request to the cloud in accordance with the video segment identifier, to receive a target video segment corresponding to the video segment identifier sent by a cloud.

For example, after entering the video editing interface, in response to the editing instruction for the initial video, the terminal device obtains the download information representing the current download progress of the initial video, and specifically, the download information may be a specific download proportion value or a video segment identifier corresponding to the video segment; and if the download information may be a download proportion value, for example, 0.3, it represents that the download ratio of the initial video is 30%, at this time, it is needed to perform one conversion based on the download proportion value and the progress identifier corresponding to the video segment pre-divided in the initial video, thereby obtaining the corresponding video segment identifier. Further, after determining the video segment identifier, a corresponding download request is sent to the cloud based on the video segment identifier, thereby obtaining a corresponding target video segment.

Further, in a possible implementation, the specific implementation of step S1011 includes:
Step S1011A: load cache data corresponding to the initial video.
Step S1011B: generate download information corresponding to the initial video in accordance with loading quantity of the cache data.

For example, after entering the video editing interface, in response to the editing instruction for the initial video, the terminal device first searches in the local based on the identifier of the initial video to obtain a storage address of the corresponding cache data, where the cache data includes a video data packet corresponding to one or more video segments, and the video data packet is stored in the local of the terminal device in a predetermined data format, specifically, the cache data may be stored in a hard disk of the local of the terminal device; and then loads the cache data to the memory, and determines a corresponding download progress, that is, download information, based on the loading quantity of the cache data. Specifically, for example, after loading all the cache data under the storage address completely, the corresponding download progress, that is, the download information, is determined according to the ratio of the loading quantity of the cache data to the total data quantity of the initial video.

**In** this embodiment, in the process of receiving the video segment of the initial video which is sent in slicing by the cloud, by obtaining the download information corresponding to the initial video, and determining the target video segment corresponding to the current download progress based on the download information, performing subsequent streaming download based on the target video segment, the breakpoint resuming function is realized, and the initial video does not need to be repeatedly downloaded in case that the same initial video is loaded for multiple times, and the loading efficiency of the initial video is improved.

Further, after obtaining the video segment, the video segment is played in the video editing interface. In a possible implementation, as shown in FIG. 5, a specific implementation of step S102 includes:
Step S1021: obtain a playback progress corresponding to the video segment and a download progress corresponding to the initial video.
Step S1022: in response to a difference value between the download progress and the playback progress being greater than a predetermined duration, playing the video frame image of the video segment.

For example, the corresponding playback of the video segment may be determined by the progress identifier in the video segment. The download progress corresponding to the initial video may be obtained by the loading quantity of the cache data, which may be specifically referred to related descriptions in the foregoing embodiments, and details are not described here again. As an example, the playback progress and the download progress are converted into a same time coordinate system, for example, converting the playback progress and the download progress into a unified playback timestamp for the initial video. Then, the difference value between the download progress and the playback progress is calculated, and when the difference value between the download progress and the playback progress is less than the predetermined duration, for example, the preset duration is 3 seconds, then it indicates that the download progress is less than the playback progress, at this time, when the network fluctuation is subsequently present, it may be caused that the playback progress catches up to the download progress, so that the problem of video playback lag is caused, which affects the video playback effect; and when the difference value between the download progress and the playback progress is greater than the predetermined duration, it indicates that the download progress is leading the playback progress relatively large, and at this time, even if the network fluctuation occurs subsequently, it may be ensured that the playback progress may not catch up to the download progress, thereby avoiding the video playback lag, and improving the fluency and the playback effect of the video playback. Therefore, in the step of the present embodiment, when it is determined that the difference value between the download progress and the play progress is greater than the predetermined duration, the video frame image of the video segment is played, and when it is determined that the difference value between the download progress and the play progress is less than the predetermined duration, the playback of the video segment is paused, and a prompt may be given, thereby avoiding the non-end lag in the video playback process, which affects the fluency of the video preview, and improving the user experience.

**Step** S102: in response to a first editing instruction for the initial video being placed on a video editing track of a video editing interface without all video segments of the initial video being received, present a video track segment corresponding to the initial video on the video editing track, and present a video frame image of an already received video segment in the initial video in a video preview area.

**In** the conventional technology, after receiving the video segment sent by the cloud, a subsequent video editing step can be performed only after all video segments of the initial video are already received. In this embodiment, without all video segments of the initial video being received, in response to a first editing instruction for the initial video being placed on a video editing track of a video editing interface, on the one hand, a video track segment corresponding to the initial video is displayed on the video editing track, and on the other hand, a video frame image of an already received video segment in the initial video is displayed in a video preview area. The video editing track is a component in the video editing interface which is used for representing video playback content and may be used for frame-by-frame editing of the video, similarly, there are audio editing tracks, video effect tracks and the like in the video editing interface, and the audio editing track and the video preview area are common settings in the video editing software, and details are not described here again. The image displayed on the video editing track, that is, the video track segment including a plurality of frames of images is usually displayed in the form of a thumbnail image, and the user may select one frame of image therein and display it in the video preview area by operating the video marking track.

Step S103: in response to a second editing instruction for a video track segment corresponding to the initial video without all video segments of the initial video being received, present an identifier of the second editing instruction on the editing track and present a target video frame image in the video preview area, wherein the second editing instruction is configured to edit the initial video; and the target video frame image is configured to display an editing result of a video frame image of an already received video segment in the initial video under the second editing instruction.

As an example, while the video editing track of the video editing interface presents the video track segment and the video preview area to play the video segment, the terminal device may receive the second editing instruction for the video track segment input by the user, so as to edit the initial video to obtain the target video frame image, for example, increasing the texture map effect, increasing the filter effect, and the like. In addition, the identifier of the second editing instruction is presented on the editing track. In a possible implementation, the identifier of the second editing instruction may be a track that is parallel to the video editing track segment, for example, an effect track, or may be a mark arose on the video track segment, to indicate, for example, segmentation or video speed change.

**The** initial video includes a plurality of video segments, and therefore, editing of the video segment by the editing instruction, that is, editing the initial video, specifically includes, for example, adding a video filter to the video segment, adding a video effect in the video segment, and the like. Further, for the editing instruction of the video editing interface, a corresponding video editing parameter is generated, and the video editing parameter may indicate the editing content and the corresponding action video frame. For example, the editing instruction # 1 is configured to add the filter A to all video frames in the initial video; and the editing instruction # 2 is configured to add the effect texture map B in the first video frame to the Nth video frame in the initial video. Then, after editing the video segment, in response to the editing instruction for the video segment, a preview video for displaying the editing result corresponding to the video segment, that is, the target video, is obtained.

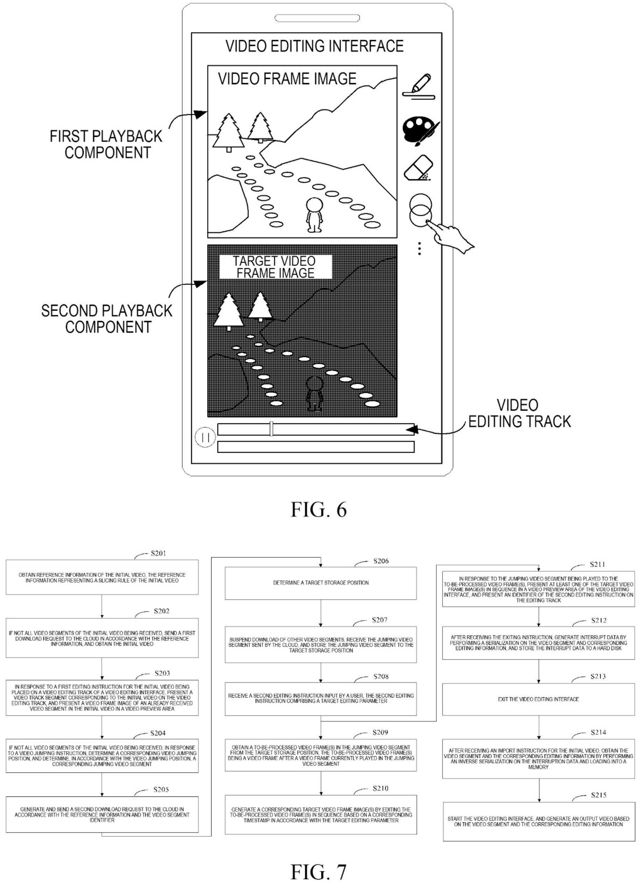

**The** target video may cover the video segment in the video editing interface, or may be independently displayed in the video editing interface. FIG. 6 is a schematic diagram of a video editing interface provided by embodiments of the present disclosure. As shown in FIG. 6, the video editing interface includes a first playback component and a second playback component, where the first playback component is configured to play the video frame image of the video segment, and the second playback component is configured to play the target video frame image. Reference is made to FIG. 6, in response to the editing instruction, after clicking the "filter" component, the filter is added to the video segment to obtain the target video, and based on the unified time stamp, the video segment and the corresponding target video are played synchronously by the first playback component and the second playback component. Therefore, the aim of contrast displaying is achieved, and the editing result is visually displayed, which cause that the user can better observe the effect of editing the initial video based on the target video.

**In** this embodiment, by receiving a video segment of the initial video which is sent in slicing by a cloud, wherein the video segment includes at least one video frame of the initial video; playing the video segment in the video editing interface; presenting the target video frame image in the video preview area, where the editing instruction is used to edit the video segment; and the target video is used to display an editing result corresponding to the video segment. Since when the video material for editing is downloaded, the method provided in this embodiment is receiving the video segment of the initial video which is sent in slicing by the cloud, and performing stream loading on the video segment, and then performing stream editing on the video segment according to the editing instruction, so that loading in slicing and editing in slicing of the initial video is implemented without downloading the complete initial video to the local before editing, thereby, the downloading waiting time consumption before the video editing is avoided, and the efficiency and fluency of video editing are improved.

Referring to FIG. 7, FIG. 7 is a schematic flowchart 2 of a method for online video editing provided by embodiments of the present disclosure. Based on embodiments shown in FIG. 2, in this embodiment, the solution is further refined, and the processing solution during performing jumping playback in the video editing page is increased. The method for online video editing provided by this embodiment includes:
Step S201: obtain reference information of the initial video, the reference information representing a slicing rule of the initial video.
Step S202, without all video segments of the initial video being received, send a first download request to the cloud in accordance with the reference information, and obtain the initial video.
Step S203, in response to a first editing instruction for the initial video being placed on a video editing track of a video editing interface, present a video track segment corresponding to the initial video on the video editing track, and present a video frame image of an already received video segment in the initial video in a video preview area.

For example, the reference information of the initial video is information representing the slicing rule of the initial video, and the reference information may be pre-stored in the cloud or in the local of the terminal device, and more specifically, the slicing rule is, for example, slicing according to the size of the video segment, slicing according to the duration of the video segment, or slicing according to the amount of the video segments, which may be set based on the requirement specifically, which will not be repeated here. When the initial video is loaded for the first time, the cloud performs slicing on the initial video according to the reference information, so that stream loading of subsequent video slicing is implemented, and the specific implementation of performing slicing on the video based on the slicing rule is the conventional technology, and details are not described here again.

Specifically, in this embodiment, after the terminal device receives the editing instruction for the initial video for the first time, the terminal device obtains the reference information, and sends the first download request to the cloud based on the reference information, and the cloud performing slicing on the initial video according to the reference information, and sends the initial video segment (that is, the first video segment of the initial video) to the terminal device, and after receiving the initial video segment, the terminal device statically displays (displaying the first frame) or dynamically displays the initial video segment. In this embodiment, the slicing granularity of the video segment is set by setting the reference information, so that different initial videos have corresponding segmentation methods in different application scenarios, to improve the flexibility of the video slicing.

**Step** S204: in response to a video jumping instruction without all video segments of the initial video being received, determine a corresponding video jumping position, and determine, in accordance with the video jumping position, a corresponding jumping video segment;

Step S205: generate and send a second download request to the cloud in accordance with the reference information and the video segment identifier.

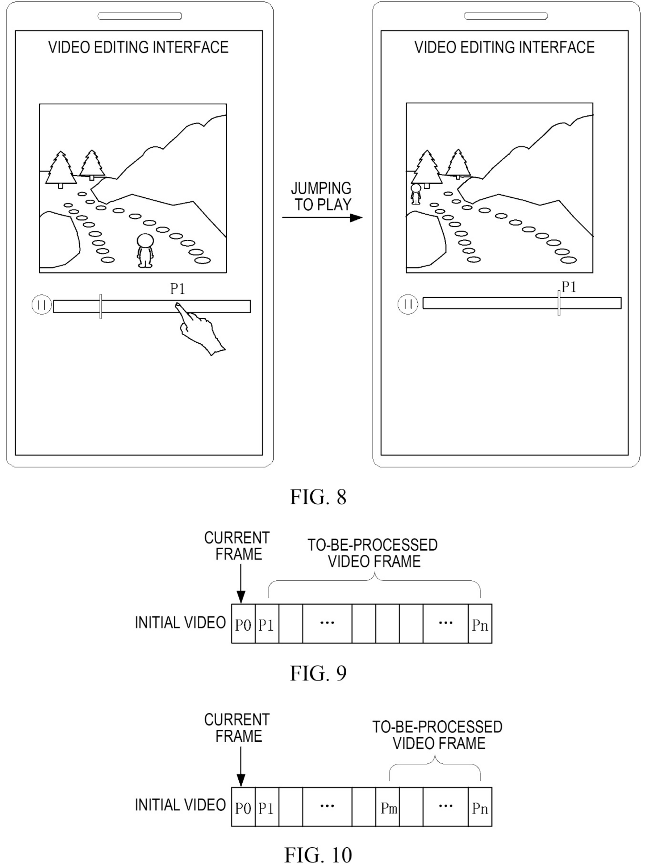

As an example, in one possible case, the terminal device receives a jumping playback operation input by a user, for example, dragging a video editing track, clicking a progress position of a video editing track, and the like. FIG. 8 is a schematic diagram of a video jumping playback provided by embodiments of the present disclosure. As shown in FIG. 8, after the terminal device receives the jumping operation instruction, for example, by clicking the target location P1 in the video editing track, the terminal device may directly jump to play (seek) the video segment at the target location P1. In the scenario of jumping to play, a corresponding video segment identifier is determined according to a video jumping location corresponding to the video jumping instruction, where the video segment identifier is an identifier representing a playback position or a playback progress, and may be determined directly based on a control value of a jumping playback control, specifically, for example, a percentage of video playback. Then, a download request is generated based on the video slicing rule represented by the reference information and the video segment identifier, a video segment may be uniquely determined based on the download request generated based on the video slicing rule represented by the reference information and the video segment identifier, and then the download request is sent to the cloud, thereby obtaining a corresponding video segment, that is, the jumping video segment.

**Step** S206: determine a target storage position.

**Step** S207: suspend downloading other video segments, receive the jumping video segment sent by the cloud, and store the jumping video segment to the target storage position.

**Due** to the stream downloading of the initial video by the terminal device, each video segment is downloaded in sequence based on the playback sequence of the initial video, and when the jumping playback occurs, if the terminal device does not download the video segment corresponding to the video jumping location, then the phenomenon that cannot be played is arose. In a possible implementation, each video segment may be downloaded in sequence based on the download progress of the initial video, until the terminal device downloads the jumping video segment corresponding to the video jumping location, and then the jumping video segment is played, in this implementation, a certain (download) waiting time is caused, which arise a visual lag, and affects the fluency of video playback.

**In** this embodiment, when the video jumping playback occurs, the downloading of other video segments is paused first, and the jumping video segment corresponding to the video jumping position is preferentially downloaded, thereby obtaining the jumping video segment, and then storing the jumping video segment in the predetermined target storage position, so that in the subsequent steps, the video jumping position is loaded from the target storage position for playing, through the steps of the embodiment, the video can be quickly played after the video jumping operation, and no additional (download) waiting time is required. Therefore, the video playback fluency is improved.

**The** specific implementation of suspending download of other video segments and downloading the jumping video segment preferentially may be implemented by changing the order of the queue of downloading tasks, setting the downloading tasks corresponding to the jumping video segments to the head of the queue of downloading tasks, and the specific implementation is not repeated here.

Further, the target storage position includes a memory or a hard disk, and as an example, the specific implementation method of step S206 includes:
Step S2061: detect a local remaining memory space;
Step S2062: determine a target storage position based on the remaining memory space, the target storage position including a memory or a hard disk.

**For** example, when storing the video segment, since the memory has high data processing speed and high efficiency, the downloaded video segment is effectively loaded into the memory. In this embodiment, the local remaining memory space in the terminal device is first detected, and when the remaining memory space is greater than the predetermined threshold, the target storage position is determined as the memory, thereby providing the processing efficiency of the video segment; and when the remaining memory space is less than the predetermined threshold, the target storage position is determined as the hard disk, thereby ensuring the redundancy of the memory capacity and providing the system stability. As an example, the data that is stored to the target storage position, that is, the cache data, and subsequently based on the loading of the cache data, the corresponding download information, that is, the download progress of the initial video, may be determined, thereby achieving the effects of breakpoint downloading, dynamic caching, and the like.

Step S208: receive a second editing instruction input by a user, the second editing instruction comprising a target editing parameter.

Step S209: obtain a to-be-processed video frame(s) in the jumping video segment from the target storage position, the to-be-processed video frame(s) being a video frame after a video frame currently played in the jumping video segment.

As an example, the target editing parameter is information representing specific editing content, for example, the type of editing the video, including adding a filter, a sticker effect, skin beautification, and the like. In addition, the parameters corresponding to the editing content, such as the type of the filter, the sticker identifier in the sticker effect, and the like. The target editing parameter in the editing instruction is information input by the user, and the specific implementation form may be determined based on a specific interface of the function implementation, and details are not described here again.

Further, the to-be-processed video frame in the jumping video segment is loaded from the target storage position, where the to-be-processed video frame is a video frame after the video frame currently played in the jumping video segment. FIG. 9 is a schematic diagram of a to-be-processed video frame provided by embodiments of the present disclosure. As shown in FIG. 9, a plurality of video frames are included in the video segment (for example, the jumping video segment), and the terminal device play each vido frame in sequence, at the time of receiving the editing instructions, for example, the corresponding video frame played currently (current frame) is frame P0, then the frame P1 after the frame P0 until the last frame Pn of the video segment currently played are to-be-processed video frames. FIG. 10 is a schematic diagram of another to-be-processed video frame provided by embodiments of the present disclosure. As shown in FIG. 10, in another possible implementation, the frame Pm until the last frame Pn of the video segment currently played are to-be-processed video frames. The frame P1 to the Pm-1 frame are pixel data which is not played but has been decoded and loaded into the playback queue, and the content of the video editing is not displayed on the frame P1 to the frame Pm-1, thereby improving the fluency of video playback.

Step S210, generate a corresponding target video frame image(s) by editing the to-be-processed video frame(s) in sequence based on a corresponding time stamp in accordance with the target editing parameter.

Step S211: in response to the jumping video segment being played to the to-be-processed video frame(s), present at least one of the target video frame image(s) in sequence in a video preview area of the video editing interface, and present an identifier of the second editing instruction on the editing track.

Further, referring to FIG. 10, according to the target editing parameter, the to-be-processed video frame(s) are processed in sequence based on the time stamp, for example, a video filter is rendered in each to-be-processed video frame, a video texture map is added, and the like, thereby generating target video frames corresponding to each to-be-processed video frame, respectively. When the jumping video segment is played to the to-be-processed video frame, for example, the current frame is the frame Pm as shown in the figure, the corresponding target video frame generated after editing the frame Pm is displayed on the video editing interface, and then, when the current frame is the frame Pm + 1, the corresponding target video frame generated after editing the frame Pm + 1 is displayed on the video editing interface, and the foregoing process is repeated until the target video frame corresponding to the last frame Pn of the jumping video segment is already played.

As an example, the specific implementation of step S211 includes:
based on the time stamp of the to-be-processed video(s), invoking the first playback component to play the to-be-processed video frame(s) image in sequence, and invoking the second playback component to play the target video frame image in sequence synchronously, respectively. With reference to the schematic diagram of the video editing interface shown in FIG. 6, based on the time stamp of the to-be-processed video(s), the to-be-processed video frame(s) and the target video frame image are played synchronously by using the first playback component and the second playback component, so that the comparison display of the to-be-processed video frame(s) and the target video frame is implemented, to cause that the user can see the editing effect more intuitively, and the efficiency of video editing is improved.

Optionally, after step S209, the method further includes:
Step S212: after receiving the exiting instruction, generate interrupt data by performing a serialization on the video segment and corresponding editing information, and store the interrupt data to a hard disk.
Step S213: exit the video editing interface.

For example, in a process of editing the initial video, the video editing interface may be exited based on a specific requirement of the user. Specifically, that is, after receiving the exiting instruction, the terminal device may close the video editing interface in response to the exiting instruction, and at the same time, the terminal device performs a serialization on the video segment and the corresponding editing information obtained in the previous step to generate the interrupt data. The video segment is data that has been downloaded from the cloud, which includes video segments that are downloaded in sequence based on the playback sequence of the initial video, and a jumping video segment that is downloaded in response to the jumping instruction, where the editing information is recording information of the editing instruction, which is used to represent specific editing content of the initial video. After that, the interrupt data is stored in the hard disk. In addition, exit the video editing interface. The step of generating and storing the interrupt data and the step of exiting the video editing interface are not temporally associated, that is, the interrupt data may be first generated and stored to the hard disk, and then the video editing interface is exited; or the video editing interface may be exited first, and the interrupt data may be generated and stored to the hard disk.

Step S214, after receiving an import instruction for the initial video, obtain the video segment and the corresponding editing information by performing an inverse serialization on the interruption data and loading into a memory.

Step S215: start the video editing interface, and generate an output video based on the video segment and the corresponding editing information.

Further, after the user exits the video editing interface, when the user enters the corresponding video editing interface for loading the same initial video, the terminal device performs the inverse serialization on, for example, the previously generated interrupt data, and loads into the memory, thereby restoring the video segment and the corresponding editing information, and then starts the video editing interface and may continue to play the corresponding video segment based on the video segment and the corresponding editing information. Alternatively, returning to step S203, performing jumping playback on the initial video, and continuing editing the initial video, finally generating the edited video, that is, outputting the video.

**In** this embodiment, when the video editing interface is exited, generating the interrupt data by the video segment and the corresponding editing information, which implement that when the same initial video is reloaded, the generated interrupt data may be used to restore the video segment downloaded before and the edited target video; thereby achieving the purpose of generating the editing draft, and the initial video does not need to be downloaded and edited again, which inproves the editing efficiency of the video.

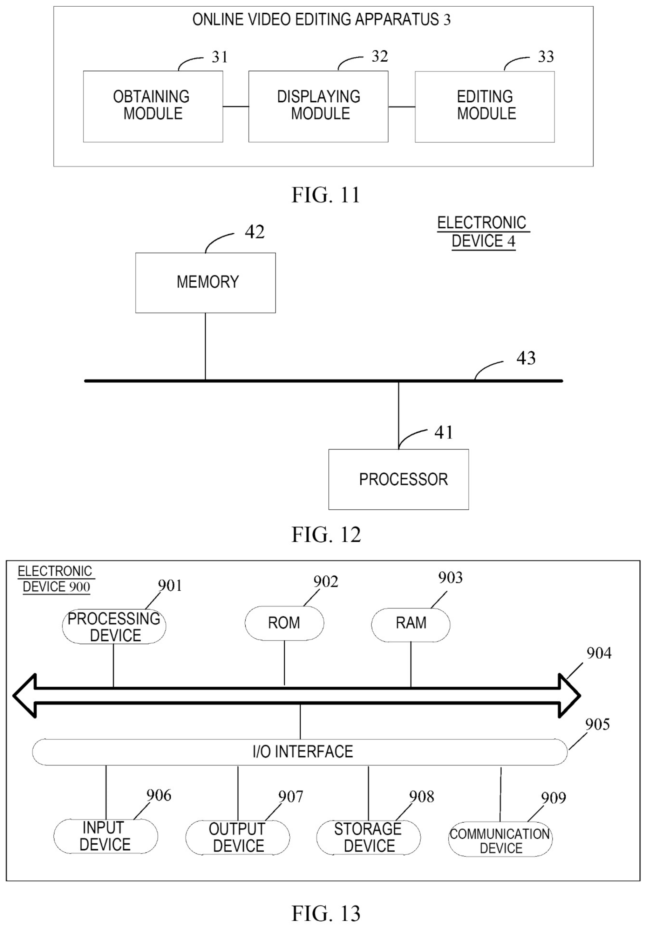

Corresponding to the method for online video editing in foregoing embodiments, FIG. 11 is a block diagram of a structure of an apparatus for online video editing provided by embodiments of the present disclosure. For ease of illustration, only portions related to embodiments of the present disclosure are shown. Referring to FIG. 11, the online video editing apparatus 3 includes:
an obtaining module 31 configured to in response to importing an initial video in a video editing task, receive a video segment of the initial video which is sent in slicing by a cloud, wherein the video segment comprises at least one video frame of the initial video;
a displaying module 32 configured to in response to a first editing instruction for the initial video being placed on a video editing track of a video editing interface without all video segments of the initial video being received,
present a video track segment corresponding to the initial video on the video editing track, and present a video frame image of an already received video segment in the initial video in a video preview area; and
an editing module 33 configured to in response to a second editing instruction for a video track segment corresponding to the initial video without all video segments of the initial video being received, present an identifier of the second editing instruction on the editing track and present a target video frame image in the video preview area, wherein the second editing instruction is configured to edit the initial video; and the target video frame image is configured to display an editing result of a video frame image of an already received video segment in the initial video under the second editing instruction.

**In** one embodiment of the present disclosure, when receiving a video segment of the initial video which is sent in slicing by a cloud, the obtaining module 31 is specifically configured to: obtain download information corresponding to the initial video, the download information representing a current download progress of the initial video; determine a video segment identifier in accordance with the download information; and send a download request to the cloud in accordance with the video segment identifier, and receive a target video segment corresponding to the video segment identifier sent by a cloud.

**In** one embodiment of the present disclosure, when obtaining download information corresponding to the initial video, the obtaining module 31 is specifically configured to: load cache data corresponding to the initial video; and generate download information corresponding to the initial video in accordance with loading quantity of the cache data.

**In** one embodiment of the present disclosure, when sending a download request to the cloud according to the video segment identifier, the obtaining module 31 is specifically configured to: obtain reference information of the initial video, the reference information representing a slicing rule of the initial video; and generate and send a download request to the cloud in accordance with the reference information and the video segment identifier.

**In** one embodiment of the present disclosure, the obtaining module 31 is further configured to: detect a local remaining memory space; determine a target storage position in accordance with the remaining memory space, the target storage position comprising a memory or a hard disk; and store the target video segment to the target storage position.

**In** one embodiment of the present disclosure, the second editing instruction comprises a target editing parameter, and when presenting a target video frame image in a video preview area, the editing module 33 is specifically configured to: obtain a to-be-processed video frame(s) in the video segment, the to-be-processed video frame(s) being a video frame after a video frame image currently played in the video preview area; generate a corresponding target video frame image(s) by editing the to-be-processed video frame(s) in sequence based on a corresponding time stamp in accordance with the target editing parameter; and in response to the video segment being played to the to-be-processed video frame(s), present at least one of the target video frame image(s) in sequence in a video preview area of the video editing interface.

**In** one embodiment of the present disclosure, the video editing interface comprises a first playback component and a second playback component, wherein the first playback component is configured to play a video frame image of the video segment, and the second playback component is configured to play the target video frame image; and when presenting at least one of the target video frame image in sequence in a video preview area of the video editing interface, the editing module 33 is specifically configured to: based on the time stamp of the to-be-processed video, invoking the first playback component to play the to-be-processed video frame in sequence, and invoking the second playback component to play the target video frame image in sequence synchronously, respectively.

**In** one embodiment of the present disclosure, the editing module 33 is further configured to: generate interrupt data by performing a serialization on the video segment and corresponding editing information, and store the interrupt data to a hard disk; and after receiving an import instruction for the initial video, obtain the video segment and the corresponding editing information by performing an inverse serialization on the interruption data and loading into a memory.

**In** one embodiment of the present disclosure, the video segment comprises a jumping video segment, and the obtaining module 31 is specifically configured to: in response to a video jumping instruction, determine a corresponding video jumping position; determine, according to the video jumping position, a corresponding jumping video segment; download the jumping video segment from the cloud, and suspend receiving other video segments until finishing downloading the jumping video segment.

**In** one embodiment of the present disclosure, the displaying module 33 is specifically configured to: obtain a playback progress corresponding to the video segment and a download progress corresponding to the initial video; and in response to a difference value between the download progress and the playback progress being greater than a predetermined duration, play the video frame image of the video segment.

**The** obtaining module 31, the displaying module 32 and the editing module 33 are connected in sequence. The online video editing apparatus 3 provided in this embodiment may perform the technical solutions of the foregoing method embodiments, and its implementation principles and technical effects thereof are similar, and details are not described here again in this embodiment.

FIG. 12 is a schematic diagram of a structure of an electronic device provided by embodiments of the present disclosure, as shown in FIG. 12, the electronic device 4 includes:
a processor 41, and a memory 42 communicatively connected to the processor 41;
the memory 42 storing computer executable instructions;;
the processor 41 executing the computer executable instructions stored in the memory 42, to implement the method for online video editing according to embodiments shown in FIG .2 to FIG. 10.

Optionally, the processor 41 and the memory 42 are connected by using a bus 43.

Related descriptions may be understood with reference to related descriptions and effects corresponding to the steps in embodiments corresponding to FIG. 2 to FIG. 10, and details are not described here again.

Embodiments of the present disclosure provide a computer readable storage medium, the computer readable storage medium storing computer executable instructions, when executed by the processor, the computer executable instructions are configured to implement the method for online video editing provided by any embodiment of embodiments corresponding to FIG. 2 to FIG. 10 of the present application.

Reference is made to FIG. 13, which shows a schematic diagram of a structure of an electronic device 900 appliable for implementing embodiments of the present disclosure, and the electronic device 900 may be a terminal device or a server. The terminal device may include, but are not limited to mobile terminals such as mobile phones, notebook computers, digital broadcast receivers, personal digital assistant (PDA), portable Android device (PAD), portable multimedia player (PMP), vehicle-mounted terminals (such as vehicle-mounted navigation terminals), etc., as well as fixed terminals such as digital television (TV), desktop computers, etc. The electronic device shown in FIG. 13 is only an example, and should not limit the function and application range of embodiments of the present disclosure.

As shown in FIG. 13, the electronic device 900 may include a processing device (such as a central processing unit, a graphics processing unit, or the like) 901 that may perform various appropriate actions and processing according to a program stored in a read only memory (ROM) 902 or a program loaded from a storage device 908 into a random access memory (RAM) 903. In the RAM 903, various programs and data required for operation of the electronic device 900 are further stored. The processing device 901, the ROM 902, and the RAM 903 are connected to each other by using a bus 904. An input/output (I/O) interface 905 is also connected to the bus 904.

Generally, the following devices may be connected to the I/O interface 905: input device 906 including, for example, a touchscreen, a touchpad, a keyboard, a mouse, a camera, a microphone, an accelerometer, and a gyroscope, etc.; output device 907 including, for example, a liquid crystal display (LCD), a loudspeaker and a vibrator, etc.; storage device 908 including, for example, a tape or a hard disk; and a communication device 909. The communication device 909 may allow the electronic device 900 to communicate wirelessly or wiredly with another device to exchange data. Although FIG. 13 shows an electronic device 900 with various devices, it should be understood that it is not required to implement or provide all shown devices. Alternatively, more or fewer devices may be implemented or provided.

In particular, according to embodiments of the present disclosure, the process described above with reference to the flowchart may be implemented as a computer software program. For example, embodiments of the present disclosure include a computer software program product that includes a computer program carried on a computer readable medium, and the computer program includes program codes used to perform the methods shown in the flowchart. In such an embodiment, the computer program may be downloaded and installed from a network by using the communications device 909, or installed from the storage device 908, or installed from the ROM 902. When the computer program is executed by the processing device 901, the foregoing functions defined in the method in embodiments of the present disclosure are executed.

**It** should be noted that the foregoing computer-readable medium in the present disclosure may be a computer-readable signal medium, a computer-readable storage medium, or any combination of both of the above. The computer-readable storage medium may be but not limited to, an electrical, magnetic, optical, electromagnetic, infrared, or semiconductor system, apparatus, or means, or any combination thereof. More specific examples of the computer-readable storage medium may include but are not limited to: an electrical connection having one or more conducting wires, a portable computer disk, a hard disk, a random-access memory (RAM), a read only memory (ROM), an erasable programmable read only memory (EPROM or flash memory), an optical fiber, a portable compact disc read only memory (CD-ROM), an optical storage device, a magnetic storage device, or any suitable combination thereof. In the present disclosure, the computer-readable storage medium may be any tangible medium that includes or stores a program, and the program may be used by or in combination with an instruction execution system, apparatus, or means. In the present disclosure, the computer-readable signal medium may include a data signal propagated in a baseband or as a part of a carrier, which carries computer-readable program codes. Such a propagated data signal may be in multiple forms, including but not limited to an electromagnetic signal, an optical signal, or any suitable combination thereof. The computer-readable signal medium may further be any computer-readable medium other than the computer-readable storage medium, and the computer-readable signal medium may send, propagate, or transmit a program that is used by or in combination with an instruction execution system, apparatus, or means. The program code included in the computer-readable medium may be transmitted by using any suitable medium, including but not limited to: a wire, an optical cable, radio frequency (RF), etc., or any suitable combination thereof.

**The** foregoing computer-readable medium may be included in the foregoing electronic device; it may also exist separately without being assembled into the electronic device.

**The** foregoing computer-readable medium carries one or more programs, when the foregoing one or more programs are executed by the electronic device, causing the electronic device to perform the method shown in the foregoing embodiments.

Computer program codes for performing the operations of the present disclosure may be written in one or more programming languages or a combination thereof, including object oriented programming languages, such as Java, Smalltalk, C++, and conventional procedural programming languages such as "C" or similar program design languages. The program codes may be executed completely on a user computer, partially on a user computer, as an independent package, partially on a user computer and partially on a remote computer, or completely on a remote computer or server. In cases involving a remote computer, the remote computer may be connected to a user computer through any type of network, including a local area network (LAN) or a wide area network (WAN), or may be connected to an external computer (for example, through the Internet by using an Internet service provider).

**The** flowcharts and block diagrams in the accompanying drawings illustrate possible architectures, functions, and operations of systems, methods, computer program products and computer programs according to various embodiments of the present disclosure. In this regard, each block in a flowchart or block diagram may represent a unit, program segment, or part of code that includes one or more executable instructions for implementing a specified logical function. It should also be noted that in some alternative implementations, functions marked in the block may also occur in different order than those marked in the accompanying drawings. For example, two blocks represented in succession may actually be executed in substantially parallel, and they may sometimes be executed in a reverse order, depending on the functions involved. It should also be noted that each block in the block diagram and/or flowchart and a combination of blocks in the block diagram and/or flowchart may be implemented by using a dedicated hardware-based system that performs a specified function or operation, or may be implemented by using a combination of dedicated hardware and a computer instruction.

**The** units involved in embodiments described in the present disclosure may be implemented either by means of software or by means of hardware. The names of these units do not limit the units themselves under certain circumstances, for example, the first obtaining unit may be further described as "a unit for obtaining at least two Internet Protocol addresses".

The functions described above herein may be performed, at least in part, by one or more hardware logic components. For example, and without limitation, example types of hardware logic components that may be used include: field programmable gate arrays (FPGAs), application specific integrated circuits (ASICs), application specific standard part (ASSP), systems on-a-chip (SOC), complex programmable logical device (CPLD) and so on.

**In** the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. Machine-readable media may include, but are not limited to, electronic, magnetic, optical, electromagnetic, infrared, or semiconductor systems, apparatus or device, or any suitable combination of the foregoing. More specific examples of machine-readable storage media would include one or more wire-based electrical connection, portable computer disks, hard disks, random access memory (RAM), read only memory (ROM), erasable programmable read only memory (EPROM) or flash memory, optical fiber, portable compact disc read-only memory (CD-ROM), optical storage device, magnetic storage device, or any suitable combination of the foregoing content.

**In** a first aspect, a method for online video editing is provided according to one or more embodiments of the present disclosure, including:
in response to importing an initial video in a video editing task, receiving a video segment of the initial video which is sent in slicing by a cloud, wherein the video segment comprises at least one video frame of the initial video; in response to a first editing instruction for the initial video being placed on a video editing track of a video editing interface without all video segments of the initial video being received, presenting a video track segment corresponding to the initial video on the video editing track, and presenting a video frame image of an already received video segment in the initial video in a video preview area; and in response to a second editing instruction for a video track segment corresponding to the initial video without all video segments of the initial video being received, presenting an identifier of the second editing instruction on the editing track and presenting a target video frame image in the video preview area, wherein the second editing instruction is configured to edit the initial video; and the target video frame image is configured to display an editing result of a video frame image of an already received video segment in the initial video under the second editing instruction.

According to one or more embodiments of the present disclosure, the receiving a video segment of the initial video which is sent in slicing by a cloud comprises: obtaining download information corresponding to the initial video, the download information representing a current download progress of the initial video; determining a video segment identifier in accordance with the download information; and sending a download request to the cloud in accordance with the video segment identifier, and receiving a target video segment corresponding to the video segment identifier sent by a cloud.

According to one or more embodiments of the present disclosure, the obtaining download information corresponding to the initial video comprises: loading cache data corresponding to the initial video; and generating download information corresponding to the initial video in accordance with loading quantity of the cache data.

According to one or more embodiments of the present disclosure, the sending a download request to the cloud in accordance with the video segment identifier comprises: obtaining reference information of the initial video, the reference information representing a slicing rule of the initial video; and generating and sending a download request to the cloud in accordance with the reference information and the video segment identifier.

According to one or more embodiments of the present disclosure, the method further comprises: detecting a local remaining memory space; determining a target storage position in accordance with the remaining memory space, the target storage position comprising a memory or a hard disk; and storing the target video segment to the target storage position.

According to one or more embodiments of the present disclosure, the second editing instruction comprises a target editing parameter, and the presenting a target video frame image in a video preview area comprises: obtaining a to-be-processed video frame(s) in the video segment, the to-be-processed video frame(s) being a video frame after a video frame image currently played in the video preview area; and obtaining a to-be-processed video frame(s) in the video segment, the to-be-processed video frame(s) being a video frame after a video frame image currently played in the video preview area; and in response to the video segment being played to the to-be-processed video frame(s), presenting at least one of the target video frame image(s) in sequence in a video preview area of the video editing interface.

According to one or more embodiments of the present disclosure, the video editing interface comprises a first playback component and a second playback component, wherein the first playback component is configured to play a video frame image of the video segment, and the second playback component is configured to play the target video frame image; the presenting at least one of the target video frame image in sequence in a video preview area of the video editing interface comprises: based on the time stamp of the to-be-processed video, invoking the first playback component to play the to-be-processed video frame in sequence, and invoking the second playback component to play the target video frame image in sequence synchronously, respectively.

According to one or more embodiments of the present disclosure, the method further comprises: generating interrupt data by performing a serialization on the video segment and corresponding editing information, and storing the interrupt data to a hard disk; and after receiving an import instruction for the initial video, obtaining the video segment and the corresponding editing information by performing an inverse serialization on the interruption data and loading into a memory.

According to one or more embodiments of the present disclosure, the video segment comprises a jumping video segment, and the receiving a video segment of the initial video which is sent in slicing by a cloud comprises: in response to a video jumping instruction, determining a corresponding video jumping position; determining, in accordance with the video jumping position, a corresponding jumping video segment; and downloading the jumping video segment from the cloud, and suspending receiving other video segments until finishing downloading the jumping video segment.

According to one or more embodiments of the present disclosure, the presenting a video frame image of an already received video segment in the initial video in a video preview area comprises: obtaining a playback progress corresponding to the video segment and a download progress corresponding to the initial video; and in response to a difference value between the download progress and the playback progress being greater than a predetermined duration, playing the video frame image of the video segment.

**In** a second aspect, an apparatus for online video editing is provided according to one or more embodiments of the present disclosure, including:
an obtaining module configured to in response to importing an initial video in a video editing task, receive a video segment of the initial video which is sent in slicing by a cloud, wherein the video segment comprises at least one video frame of the initial video;
a displaying module configured to in response to a first editing instruction for the initial video being placed on a video editing track of a video editing interface without all video segments of the initial video being received,
present a video track segment corresponding to the initial video on the video editing track, and present a video frame image of an already received video segment in the initial video in a video preview area; and
an editing module configured to in response to a second editing instruction for a video track segment corresponding to the initial video without all video segments of the initial video being received, present an identifier of the second editing instruction on the editing track and present a target video frame image in the video preview area, wherein the second editing instruction is configured to edit the initial video; and the target video frame image is configured to display an editing result of a video frame image of an already received video segment in the initial video under the second editing instruction.

According to one or more embodiments of the present disclosure, when receiving a video segment of the initial video which is sent in slicing by a cloud, the obtaining module is specifically configured to: obtain download information corresponding to the initial video, the download information representing a current download progress of the initial video; determine a video segment identifier in accordance with the download information; and send a download request to the cloud in accordance with the video segment identifier, and receive a target video segment corresponding to the video segment identifier sent by a cloud.

According to one or more embodiments of the present disclosure, when obtaining download information corresponding to the initial video, the obtaining module is specifically configured to: load cache data corresponding to the initial video; and generate download information corresponding to the initial video in accordance with loading quantity of the cache data.

According to one or more embodiments of the present disclosure, when sending a download request to the cloud according to the video segment identifier, the obtaining module is specifically configured to: obtain reference information of the initial video, the reference information representing a slicing rule of the initial video; and generate and send a download request to the cloud in accordance with the reference information and the video segment identifier.

According to one or more embodiments of the present disclosure, the obtaining module is further configured to: detect a local remaining memory space; determine a target storage position in accordance with the remaining memory space, the target storage position comprising a memory or a hard disk; and store the target video segment to the target storage position.

According to one or more embodiments of the present disclosure, the second editing instruction comprises a target editing parameter, and when presenting a target video frame image in a video preview area, the editing module is specifically configured to: obtain a to-be-processed video frame(s) in the video segment, the to-be-processed video frame(s) being a video frame after a video frame image currently played in the video preview area; generate a corresponding target video frame image(s) by editing the to-be-processed video frame(s) in sequence based on a corresponding time stamp in accordance with the target editing parameter; and in response to the video segment being played to the to-be-processed video frame(s), present at least one of the target video frame image(s) in sequence in a video preview area of the video editing interface.

According to one or more embodiments of the present disclosure, the video editing interface comprises a first playback component and a second playback component, wherein the first playback component is configured to play a video frame image of the video segment, and the second playback component is configured to play the target video frame image; and when presenting at least one of the target video frame image in sequence in a video preview area of the video editing interface, the editing module is specifically configured to: based on the time stamp of the to-be-processed video, invoking the first playback component to play the to-be-processed video frame in sequence, and invoking the second playback component to play the target video frame image in sequence synchronously, respectively.

According to one or more embodiments of the present disclosure, the editing module is further configured to: generate interrupt data by performing a serialization on the video segment and corresponding editing information, and store the interrupt data to a hard disk; and after receiving an import instruction for the initial video, obtain the video segment and the corresponding editing information by performing an inverse serialization on the interruption data and loading into a memory.

According to one or more embodiments of the present disclosure, the video segment comprises a jumping video segment, and the obtaining module is specifically configured to: in response to a video jumping instruction, determine a corresponding video jumping position; determine, according to the video jumping position, a corresponding jumping video segment; download the jumping video segment from the cloud, and suspend receiving other video segments until finishing downloading the jumping video segment.

According to one or more embodiments of the present disclosure, the displaying module is specifically configured to: obtain a playback progress corresponding to the video segment and a download progress corresponding to the initial video; and in response to a difference value between the download progress and the playback progress being greater than a predetermined duration, play the video frame image of the video segment.

**In** a third aspect, an electronic device is provided according to one or more embodiments of the present disclosure, including: a processor, and a memory communicatively connected to the processor; the memory storing computer executable instructions;
the processor executing the computer executable instructions stored in the memory, to implement the method for online video editing according to the first aspect and various possible designs of the first aspect.

**In** a fourth aspect, a computer-readable storage medium is provided according to one or more embodiments of the present disclosure, the computer readable storage medium storing computer executable instructions, when a processor executes the computer executable instructions, implements the method for online video editing of the first aspect and various possible designs of the first aspect.

**In** a fifth aspect, a computer program product is provided by embodiments of the present disclosure, ₁ comprising a computer program, when executed by a processor, the computer program implements the method for online video editing of the first aspect and various possible designs of the first aspect.

The above description is only embodiments of the present disclosure and an illustration of the technical principles utilized. It should be understood by those skilled in the art that the scope of disclosure involved in the present disclosure is not limited to technical solutions formed by a particular combination of the above technical features, but also covers other technical solutions formed by any combination of the above technical features or their equivalent features without departing from the above disclosed concept, for example, a technical solution formed by interchanging the above features with (but not limited to) technical features with similar functions disclosed in the present disclosure.

Further, although the operations are depicted using a particular order, this should not be construed as requiring that the operations be performed in the particular order shown or in sequential order of execution. Multitasking and parallel processing may be advantageous in certain environments. Similarly, while several specific implementation details are included in the above discussion, these should not be construed as limiting the scope of the present disclosure. Certain features described in the context of separate embodiments may also be implemented in combination in a single embodiment. Conversely, various features described in the context of a single embodiment may also be implemented in multiple embodiments, either individually or in any suitable sub-combination.

Although the present subject has been described using language specific to structural features and/or method logical actions, it should be understood that the subject limited in the appended claims is not necessarily limited to the particular features or actions described above. Rather, the particular features and actions described above are merely example forms of implementing the claims.

## Claims

1. A method for online video editing, comprising:
in response to importing an initial video in a video editing task, receiving a video segment of the initial video which is sent in slicing by a cloud, wherein the video segment comprises at least one video frame of the initial video;
in response to a first editing instruction for the initial video being placed on a video editing track of a video editing interface without all video segments of the initial video being received, presenting a video track segment corresponding to the initial video on the video editing track, and presenting a video frame image of an already received video segment in the initial video in a video preview area;
in response to a second editing instruction for a video track segment corresponding to the initial video without all video segments of the initial video being received, presenting an identifier of the second editing instruction on the editing track and presenting a target video frame image in a video preview area, wherein the second editing instruction is configured to edit the initial video; and the target video frame image is configured to display an editing result of a video frame image of an already received video segment in the initial video under the second editing instruction.

2. The method of claim 1, wherein the receiving a video segment of the initial video which is sent in slicing by a cloud comprises:
obtaining download information corresponding to the initial video, the download information representing a current download progress of the initial video;
determining a video segment identifier in accordance with the download information;
sending a download request to the cloud in accordance with the video segment identifier, and receiving a target video segment corresponding to the video segment identifier sent by a cloud.

3. The method of claim 2, wherein the obtaining download information corresponding to the initial video comprises:
loading cache data corresponding to the initial video;
generating download information corresponding to the initial video in accordance with loading quantity of the cache data.

4. The method of claim 2, wherein the sending a download request to the cloud in accordance with the video segment identifier comprises:
obtaining reference information of the initial video, the reference information representing a slicing rule of the initial video;
generating and sending a download request to the cloud in accordance with the reference information and the video segment identifier.

5. The method of claim 2, wherein the method further comprises:
detecting a local remaining memory space;
determining a target storage position in accordance with the remaining memory space, the target storage position comprising a memory or a hard disk;
storing the target video segment to the target storage position.

6. The method of claim 1, wherein the second editing instruction comprises a target editing parameter, and the presenting a target video frame image in a video preview area comprises:
obtaining a to-be-processed video frame(s) in the video segment, the to-be-processed video frame(s) being a video frame after a video frame image currently played in the video preview area;
generating a corresponding target video frame image(s) by editing the to-be-processed video frame(s) in sequence based on a corresponding time stamp in accordance with the target editing parameter;
in response to the video segment being played to the to-be-processed video frame(s), presenting at least one of the target video frame image(s) in sequence in a video preview area of the video editing interface.

7. The method of claim 6, wherein the video editing interface comprises a first playback component and a second playback component, wherein the first playback component is configured to play a video frame image of the video segment, and the second playback component is configured to play the target video frame image;
the presenting at least one of the target video frame image(s) in sequence in a video preview area of the video editing interface comprises:
based on the time stamp of the to-be-processed video(s), invoking the first playback component to play the to-be-processed video frame(s) in sequence, and invoking the second playback component to play the target video frame image in sequence synchronously, respectively.

8. The method of claim 1, wherein the method further comprises:
generating interrupt data by performing a serialization on the video segment and corresponding editing information, and storing the interrupt data to a hard disk;
after receiving an import instruction for the initial video, obtaining the video segment and the corresponding editing information by performing an inverse serialization on the interruption data and loading into a memory.

9. The method of claim 1, wherein the video segment comprises a jumping video segment, and the receiving a video segment of the initial video which is sent in slicing by a cloud comprises:
in response to a video jumping instruction, determining a corresponding video jumping position;
determining, in accordance with the video jumping position, a corresponding jumping video segment;
downloading the jumping video segment from the cloud, and suspending receiving other video segments until finishing downloading the jumping video segment.

10. The method of claim 1, wherein the presenting a video frame image of an already received video segment in the initial video in a video preview area comprises:
obtaining a playback progress corresponding to the video segment and a download progress corresponding to the initial video;
in response to a difference value between the download progress and the playback progress being greater than a predetermined duration, playing the video frame image of the video segment.

11. An apparatus for online video editing, comprising:
an obtaining module configured to in response to importing an initial video in a video editing task, receive a video segment of the initial video which is sent in slicing by a cloud, wherein the video segment comprises at least one video frame of the initial video;
a displaying module configured to in response to a first editing instruction for the initial video being placed on a video editing track of a video editing interface without all video segments of the initial video being received, present a video track segment corresponding to the initial video on the video editing track, and present a video frame image of an already received video segment in the initial video in a video preview area;
an editing module configured to in response to a second editing instruction for a video track segment corresponding to the initial video without all video segments of the initial video being received, present an identifier of the second editing instruction on the editing track and present a target video frame image in a video preview area, wherein the second editing instruction is configured to edit the initial video; and the target video frame image is configured to display an editing result of a video frame image of an already received video segment in the initial video under the second editing instruction.

12. An electronic device, comprising: a processor, and a memory communicatively connected to the processor;
the memory storing computer executable instructions;
the processor executing the computer executable instructions stored in the memory, to implement the method for online video editing of any of claims 1 to 10.

13. A computer readable storage medium, the computer readable storage medium storing computer executable instructions, when a processor executes the computer executable instructions, implements the method for online video editing of any of claims 1-10.

14. A computer program product, comprising a computer program, when executed by a processor, the computer program implements the method for online video editing of any of claims 1-10.
